# FASCICULE DE BREVET EUROPEEN

(11) **EP 2 138 821 B1**
(45) Date de publication et mention de la délivrance du brevet: **08.08.2012**
(21) Numéro de dépôt: 09161968.4
(22) Date de dépôt: 04.06.2009
(51) Int. Cl.: G01L 19/06, B29D 30/06

(54) **Dispositif de mesure de pression et moule pour la vulcanisation d'un pneumatique**
Druckmessvorrichtung und Form für das Vulkanisieren eines Gummireifens
Device for measuring pressure and mould for vulcanising a rubber tyre

(30) Priorité: 26.06.2008 FR 0854272
(43) Date de publication de la demande: 30.12.2009
(73) Titulaire: Compagnie Générale des Etablissements Michelin, 63000 Clermont-Ferrand (FR); Michelin Recherche et Technique S.A., 1763 Granges-Paccot (CH)
(72) Inventeur: Buvat, Gérard, 63200, MARSAT (FR); Hinc, Henri, 63540, ROMAGNAT (FR); Pialot, Frédéric, 63190, MOISSAT (FR)
(74) Mandataire: Reynaud, Georges

(56) Documents cités:
- CH-A5- 679 469
- DE-B- 1 131 394
- DE-C1- 3 920 424
- US-A- 2 399 342
- US-A- 3 929 012
- US-A- 4 143 114
- US-A- 4 502 857
- US-B1- 6 345 974

## Description

La présente invention concerne le domaine technique des pneumatiques et plus particulièrement de la fabrication de ces pneumatiques.

Il est connu de fabriquer un pneumatique en chauffant une ébauche crue, à base de gomme, du pneumatique dans un moule de forme générale annulaire autour d'un axe de révolution. Le chauffage de l'ébauche crue provoque sa vulcanisation.

Plus particulièrement, il convient, au cours de la vulcanisation, de contrôler la pression exercée par la masse de gomme sur une paroi interne du moule afin notamment de déterminer le passage de l'état cru à l'état cuit de la masse de gomme.

Il est connu de contrôler cette pression à l'aide d'un capteur de pression comprenant par exemple un boîtier muni d'une paroi latérale et d'une face d'extrémité formant une surface de mesure de pression sur laquelle est exercée la pression à mesurer. Le boîtier est également destiné à loger un corps d'épreuve, ce corps d'épreuve étant lié fonctionnellement à la surface de mesure.

Le document DE 39 20424-C1 décrit un tel dispositif comprenant les caractéristiques définies dans le préambule de la revendication 1 du présent brevet.

De façon classique, la surface de mesure se déforme sous l'effet d'une force de pression et transmet cette déformation mécanique au corps d'épreuve qui convertit cette déformation en une grandeur physique à destination d'un détecteur sensible à cette dernière.

Afin de mesurer la pression exercée par la gomme sur la paroi interne du moule, le capteur de pression est inséré dans un logement prévu à cet effet à l'intérieur du moule de manière à ce que sa surface de mesure soit en contact avec la gomme.

Or, lorsque l'ébauche est à l'état cru, un résidu de gomme peut s'écouler à l'intérieur du logement du capteur, notamment le long de la paroi externe de son boîtier. Au cours de la vulcanisation, ce résidu de gomme peut gonfler et venir exercer une pression sur la paroi du boîtier provoquant une déformation de cette paroi entraînant également une déformation de la surface de mesure du capteur.

Cette déformation intempestive de la surface de mesure a pour conséquence de générer des mesures erronées de la pression.

L'invention a notamment pour but de proposer un dispositif de mesure de la pression permettant de surmonter cet inconvénient tout en étant simple à réaliser.

A cet effet, l'invention a pour objet un dispositif de mesure de pression comme défini dans la revendication 1, comprenant une surface de mesure de pression liée fonctionnellement à un corps d'épreuve,
- un organe rigide, lié fonctionnellement au corps d'épreuve, la surface de mesure formant une surface de l'organe rigide,
- un support, séparé fonctionnellement du corps d'épreuve, de forme générale annulaire, dans lequel est logé l'organe rigide, et
- une masse souple intercalée radialement entre le support et l'organe rigide de façon que le contour de la surface de mesure soit délimité par la masse souple, cette masse souple adhérant au support et à l'organe rigide.

Grâce à la présence de la masse souple délimitant le contour de la surface de mesure et adhérant à la fois au support et à l'organe rigide, la gomme ne peut pas s'écouler à l'intérieur du logement du dispositif de mesure de pression et venir ainsi perturber la mesure de la pression.

En outre, du fait que le support est séparé fonctionnellement du corps d'épreuve, un résidu de gomme peut s'écouler dans des interstices formés entre une paroi externe du support et une paroi interne du logement, sans risquer de perturber la mesure de la pression exercée sur la surface de mesure.

Des formes préférentielles de l'invention font l'objet des revendications dépendantes.

Un dispositif de mesure de pression selon l'invention peut comprendre l'une ou plusieurs des caractéristiques selon lesquelles :
- au moins un des éléments parmi le support et l'organe rigide comprend une surface d'adhérence annulaire du type à gorge et collet,
- l'organe rigide comprenant des première et deuxième faces d'extrémité opposées, la première face formant la surface de mesure et la deuxième face formant une face de contact avec une surface déformable liée fonctionnellement au corps d'épreuve,
- l'aire de la première face d'extrémité de l'organe est égale à l'aire de la surface déformable,
- la masse souple est surmoulée sur l'organe rigide et sur le support,
- l'organe rigide est réalisé dans un matériau indéformable, par exemple comprenant essentiellement du polyétheréthercétone (PEEK),
- la masse souple est réalisée dans un matériau comprenant essentiellement du silicone ou une gomme à base de butyle,
- le corps d'épreuve est du type à piézo-électrique ou à jauge de contrainte,
- le support comporte une surface externe destinée à être emboîtée dans un trou d'un moule débouchant dans un volume de logement d'une matière dont on veut mesurer la pression.

L'invention a encore pour objet un ensemble d'un dispositif de mesure de pression et d'un moule pour la vulcanisation d'une gomme pour pneumatique comprenant :
- une paroi interne délimitant un volume de logement de la gomme, et
- un trou destiné à loger le dispositif de mesure de pression, le trou débouchant dans le volume,
**caractérisé en ce que** le dispositif est tel que défini ci-dessus.

L'invention sera mieux comprise à la lecture de la description qui va suivre, donnée uniquement à titre d'exemple et faite en se référant aux dessins dans lesquels :
- la figure 1 représente une vue en coupe d'un moule pour la vulcanisation d'une masse de gomme d'un pneumatique comprenant un dispositif de mesure de pression selon l'invention,
- la figure 2 représente une vue en élévation du dispositif de la figure 1,
- la figure 3 représente une vue en détail de la partie cerclée de la figure 2.

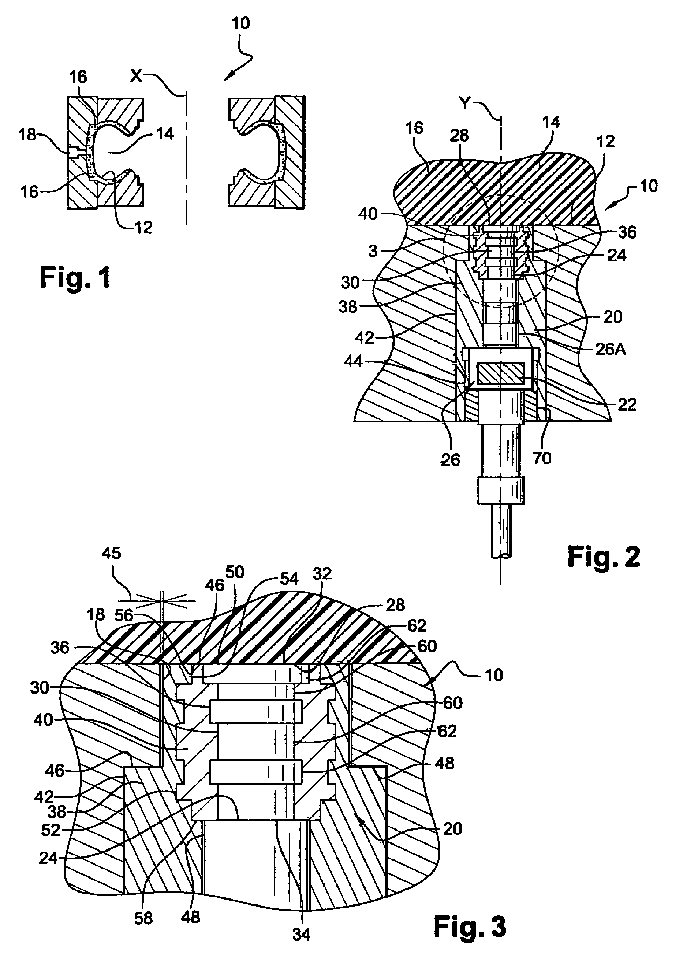

On a représenté sur la figure 1 un moule pour la vulcanisation d'une ébauche crue de pneumatique pour véhicule automobile, désigné par la référence générale 10. Comme cela est représenté sur la vue en coupe de la figure 1, le moule 10 a une forme générale annulaire autour d'un axe X de révolution. Ce moule 10 comprend une paroi interne 12 délimitant un volume 14 intérieur ouvert de logement de matière, étant dans cet exemple une gomme 16 formant l'ébauche crue du pneumatique.

Ce moule 10 comprend un trou 18 débouchant à l'intérieur du volume 14 de logement de la gomme 16 au cours de sa vulcanisation. Ce trou 18 est adapté pour loger un dispositif 20 de mesure d'une pression exercée, notamment par la gomme 16 au cours de sa vulcanisation, sur la paroi interne 12 du moule 10 (figures 2 et 3). Le moule 10 et le dispositif 20 forment un ensemble.

Le dispositif 20 comprend un corps d'épreuve 22. De façon classique, le corps d'épreuve 22 soumis à la pression à mesurer la transforme en une autre grandeur physique telle qu'une déformation, un déplacement, etc. En outre, le dispositif 20 comprend un détecteur (non représenté) qui est sensible à cette grandeur physique et qui est destiné à convertir cette grandeur détectée par exemple en un signal électronique pour sa transmission à des moyens d'affichage de la pression mesurée (non représentés).

Le dispositif 20 comprend également une surface déformable 24 liée fonctionnellement au corps d'épreuve 22. De préférence, le corps d'épreuve 22 comprend un élément du type à piézo-électrique apte à transformer la déformation mécanique subie par la surface déformable 24 en un signal électrique à destination du détecteur. En variante, le corps d'épreuve comprend un élément du type à jauge de contrainte.

Le dispositif 20 comprend encore un boîtier 26 de logement du corps d'épreuve 22 et du détecteur, le boîtier 26 comprenant au moins une face d'extrémité formée par la surface déformable 24 ainsi qu'une paroi latérale 26A de forme générale cylindrique. La surface 24 est liée fonctionnellement au corps d'épreuve 22, de sorte que lorsqu'une pression est exercée sur la surface 24, la déformation de cette surface 24 qui en résulte est transmise au corps d'épreuve 22.

En outre, le dispositif 20 comprend une surface 28 de mesure de pression sur laquelle est exercée la pression à mesurer. Cette surface de mesure 28 est liée fonctionnellement au corps d'épreuve 22. A cet effet, le dispositif 20 comprend un organe rigide 30 qui est destiné à transmettre la pression exercée sur la surface de mesure 28 à la surface déformable 24.

Cet organe rigide 30 comprend des première 32 et deuxième 34 faces d'extrémités opposées, la première face 32 formant la surface de mesure 28 et la deuxième face 34 formant une face de contact avec la surface déformable 24 du dispositif 20. L'organe rigide 30 a, dans cet exemple, un corps de forme générale cylindrique comprenant une paroi latérale 36 reliant entre elles ses deux faces d'extrémités opposées 32 et 34.

De préférence, l'organe rigide 30 est réalisé dans un matériau comprenant essentiellement du polyétheréthercétone (PEEK) afin d'éviter toute adhésion entre la surface de mesure 28 et le matériau formant la gomme 16 en cours de la vulcanisation.

En outre, dans cet exemple, l'aire de la première face d'extrémité 32 de l'organe 30 est égale à l'aire de la surface déformable 24. Eventuellement, en variante, l'aire de la première face d'extrémité 32 de l'organe 30 peut avoir une valeur différente de celle de la surface déformable 24 et dans ce cas, le dispositif 20 comprend des moyens (non représentés) d'application d'un coefficient correcteur à la pression mesurée dépendant notamment du rapport des deux aires.

Le dispositif 20 comprend également un support 38 séparé fonctionnellement du corps d'épreuve 22 de forme générale annulaire autour d'un axe Y de révolution et dans lequel est logé l'organe rigide 30.

Ainsi, dans l'exemple illustré sur la figure 2, le support 38 comporte une surface externe 42 de forme complémentaire à une paroi interne 44 du trou 18 et cette surface externe 42 est destinée à être emboîtée dans le trou 18. Comme cela est illustré en détail sur la figure 3, il existe un interstice 45 entre la surface externe 42 du support 38 et la paroi interne 44 du trou 18 afin de faciliter l'emboîtement du dispositif 20 dans le trou 18.

En outre, la surface externe 42 présente dans l'exemple décrit, un épaulement périphérique annulaire 46 de positionnement destiné à venir en appui contre une butée annulaire 48 de forme complémentaire ménagée dans la paroi interne 44 du trou 18. Le support 38 est en outre réalisé par exemple dans un matériau métallique.

Le dispositif 20 comprend encore une masse souple 40 intercalée radialement entre le support 38 et l'organe rigide 30.

Plus particulièrement, la masse souple 40 est logée dans le support 38 de façon que le contour de la première face d'extrémité 32 de l'organe 30 et donc le contour de la surface de mesure 28 soit délimité par la masse souple 40.

Par ailleurs, la masse souple 40 adhère au support 38 et à l'organe rigide 30. Ainsi, la masse souple 40 a une forme générale annulaire entourant la paroi latérale 36 de l'organe rigide 30 et est délimitée par une surface interne 50 d'adhérence avec la paroi 36 de l'organe rigide 30 et une surface externe 52 d'adhérence avec une paroi interne 54 du support 38. Les surfaces externe 52 et interne 50 de la masse souple 40 sont reliées entre elles par des première 56 et deuxième 58 faces d'extrémités opposées. La première face d'extrémité 56 délimite le contour de la surface de mesure 28 et la seconde face d'extrémité 58 délimite le contour de la face de l'organe 30 en contact avec la surface déformable 24.

Chaque surface d'adhérence 50 et 52 respectivement de l'organe rigide 30 et du support 38 avec la masse souple 40 est du type comprenant des gorges 60 et des collets 62.

Dans cet exemple, le boîtier 26 logeant le corps d'épreuve 22 est fixé au support 38 par un écrou 70 permettant d'étalonner le dispositif 20. De préférence, afin de réaliser l'adhérence, la masse souple 40 est surmoulée, par exemple par injection, sur l'organe rigide 30 et le support 38. L'organe rigide 30 peut avantageusement être en acier tourné. La masse souple 40 est réalisée à titre d'exemple dans un matériau comprenant essentiellement du silicone ou une gomme à base de butyle.

Comme on peut le voir sur les figures 2 et 3, à l'état monté à l'intérieur du trou 18, la surface de mesure 28 du dispositif 20 affleure la paroi interne 12 du moule 10. Cet agencement permet d'intégrer le dispositif 20 dans le moule 10 en évitant la formation de reliefs sur la paroi interne 12 du moule 10 risquant de marquer l'ébauche.

On va maintenant décrire les principaux aspects du fonctionnement du dispositif de mesure de pression.

Initialement, la gomme 16 formant l'ébauche crue, logée dans le volume intérieur 14 du moule 10 est dans un état lui permettant de s'écouler sur la paroi interne 12 et sur la surface de mesure 28 affleurant cette paroi interne 12.

Comme le contour de la surface de mesure 28 est délimité par la masse souple 40 qui adhère d'une part au support 38 et d'autre part à l'organe rigide 40, la masse souple 40 empêche la gomme 16 de s'écouler notamment sur le long de la paroi externe 26A du boîtier 26 qui est liée fonctionnellement au corps d'épreuve 22 du dispositif 20.

Lors de sa vulcanisation, la gomme 16 gonfle avec la température et la pression exercée par la gomme 16 sur la paroi interne 12 du moule 10 augmente.

Comme la surface de mesure 28 du dispositif 20 affleure la paroi interne 12 du moule 10, la gomme 16 en gonflant vient exercer une pression de valeur identique sur cette surface 28 et sur la paroi 12.

La pression exercée sur la surface de mesure 28 par cette gomme 16 est transmise par l'intermédiaire de l'organe rigide 30 à la surface déformable 24 liée fonctionnellement au corps d'épreuve 22. En effet, comme la masse 40 est souple, l'organe rigide 30 peut se déplacer dans la masse 40 et venir déformer la surface déformable 24 par application d'une compression de sa deuxième face d'extrémité 34 contre cette surface 24. La surface déformable 24 liée fonctionnellement au corps d'épreuve 22 transmet une information relative à sa déformation mécanique au corps d'épreuve 22 qui va transformer cette déformation en une autre grandeur électrique, par exemple une grandeur électrique, à laquelle le détecteur est sensible. De façon classique, le détecteur convertit en des signaux électroniques la grandeur physique détectée.

Eventuellement, un résidu de gomme 16 peut s'écouler dans l'interstice 45 formé entre le support 38 et la paroi interne du trou 18. Toutefois, dans ce cas, du fait que le support 38 est séparé fonctionnellement du corps d'épreuve 22, le résidu de gomme exerce une pression sur le support 38 sans que cette dernière soit transmise aux éléments du dispositif 20 liés fonctionnellement au corps d'épreuve 22.

Enfin, la surface déformable 24, pouvant être relativement fragile, est protégée de chocs et agressions mécaniques susceptibles de se produire sur la paroi interne 12 du moule 10 par exemple lors du retrait de l'ébauche de pneumatique cuite car la surface 24 est séparée du volume intérieur 14 du moule par l'organe rigide 38 et la masse souple 40.

## Revendications

1. Dispositif (20) de mesure de pression comprenant une surface (28) de mesure de pression liée fonctionnellement à un corps d'épreuve (22),
- un organe rigide (30), lié fonctionnellement au corps d'épreuve (22), la surface de mesure (28) formant une surface de l'organe rigide (30),
- un support (38), séparé fonctionnellement du corps d'épreuve (22), de forme générale annulaire, dans lequel est logé l'organe rigide (30),
ledit dispositif étant **caractérisé par**
une masse souple (40) intercalée radialement entre le support (38) et l'organe rigide (30) de façon que le contour de la surface de mesure (28) soit délimité par la masse souple (40), cette masse souple (40) adhérant au support (38) et à l'organe rigide (30).

2. Dispositif (20) selon la revendication 1, dans lequel au moins un des éléments parmi le support (38) et l'organe rigide (30) comprend une surface d'adhérence (50, 52) annulaire du type à gorge (60) et collet (62).

3. Dispositif (20) selon la revendication 1 ou 2, dans lequel l'organe rigide (28) comprenant des première (32) et deuxième (34) faces d'extrémité opposées, la première face (32) formant la surface de mesure (26) et la deuxième face (34) formant une face de contact avec une surface déformable (24) liée fonctionnellement au corps d'épreuve (22).

4. Dispositif (20) selon la revendication 3, dans lequel l'aire de la première face d'extrémité (32) de l'organe (28) est égale à l'aire de la surface déformable (24).

5. Dispositif (20) selon l'une quelconque des revendications 1 à 4, dans lequel la masse souple (40) est surmoulée sur l'organe rigide (30) et sur le support (38).

6. Dispositif (20) selon l'une quelconque des revendications 1 à 5, dans lequel l'organe rigide (28) est réalisé dans un matériau indéformable, par exemple comprenant essentiellement du polyétheréthercétone (PEEK).

7. Dispositif (20) selon l'une quelconque des revendications 1 à 6, dans lequel la masse souple (40) est réalisée dans un matériau comprenant essentiellement du silicone ou une gomme à base de butyle.

8. Dispositif (20) selon l'une quelconque des revendications 1 à 7, dans lequel le corps d'épreuve (22) est du type à piézo-électrique ou à jauge de contrainte.

9. Dispositif (20) selon l'une quelconque des revendications 1 à 8, dans lequel le support (38) comporte une surface externe destinée à être emboîtée dans un trou (18) d'un moule (10) débouchant dans un volume (14) de logement d'une matière dont on veut mesurer la pression.

10. Ensemble d'un dispositif de mesure de pression et d'un moule pour la vulcanisation d'une gomme pour pneumatique comprenant :
- une paroi interne délimitant un volume de logement de la gomme, et
- un trou destiné à loger le dispositif de mesure de pression, le trou débouchant dans le volume,
**caractérisé en ce que** le dispositif est selon l'une quelconque des revendications 1 à 9.

## Claims

1. Device (20) for measuring pressure, comprising a pressure-measuring surface (28) functionally connected to a test body (22),
- a rigid member (30) functionally connected to the test body (22), the measuring surface (28) forming one surface of the rigid member (30),
- a support (38), functionally separate from the test body (22), of annular overall shape, in which the rigid member (30) is housed, the said device being **characterized by** a flexible mass (40) interposed radially between the support (38) and the rigid member (30) in such a way that the contour of the measuring surface (28) is delimited by the flexible mass (40), this flexible mass (40) adhering to the support (38) and to the rigid member (30).

2. Device (20) according to Claim 1, in which at least one of the elements out of the support (38) and the rigid member (30) comprises an annular adhesion surface (50, 52) of the groove (60) and flange (62) type.

3. Device (20) according to Claim 1 or 2, in which the rigid member (30) comprises opposite first (32) and second (34) end faces, the first face (32) forming the measuring surface (28) and the second face (34) forming a face for contact with a deformable surface (24) functionally connected to the test body (22).

4. Device (20) according to Claim 3, in which the surface area of the first end face (32) of the member (30) is equal to the surface area of the deformable surface (24).

5. Device (20) according to any one of Claims 1 to 4, in which the flexible mass (40) is overmoulded onto the rigid member (30) and onto the support (38).

6. Device (20) according to any one of Claims 1 to 5, in which the rigid member (30) is made of a non-deformable material, for example one essentially comprising polyether ether ketone (PEEK).

7. Device (20) according to any one of Claims 1 to 6, in which the flexible mass (40) is made of a material essentially comprising silicone or a butyl-based rubber.

8. Device (20) according to any one of Claims 1 to 7, in which the test body (22) is of the piezoelectric or strain gauge type.

9. Device (20) according to any one of Claims 1 to 8, in which the support (38) comprises an external surface intended to be fitted into a hole (18) in a mould (10) opening into a volume (14) housing a material the pressure of which is to be measured.

10. Assembly of a pressure-measuring device and of a mould for vulcanizing a rubber for a tyre, comprising:
- an interior wall delimiting a volume for housing the rubber, and
- a hole intended to house the pressure-measuring device, the hole opening into the volume, **characterized in that** the device is a device according to any one of Claims 1 to 9.

## Patentansprüche

1. Druckmessvorrichtung (20), die eine Messfläche (28) enthält, welche funktionell mit einem Aufnehmer (22) verbunden ist,
- ein funktionell mit dem Aufnehmer (22) verbundenes steifes Organ (30), wobei die Messfläche (28) eine Fläche des steifen Organs (30) bildet,
- einen funktionell vom Aufnehmer (22) getrennten, allgemein ringförmigen Träger (38), in dem das steife Organ (30) untergebracht ist, wobei die Vorrichtung durch eine elastische Masse (40) gekennzeichnet ist, die radial zwischen den Träger (38) und das steife Organ (30) eingefügt ist, so dass der Umriss der Messfläche (28) von der elastischen Masse (40) begrenzt wird, wobei diese elastische Masse (40) am Träger (38) und am steifen Organ (30) haftet.

2. Vorrichtung (20) nach Anspruch 1, bei der mindestens eines der Elemente, der Träger (38) oder das steife Organ (30), eine ringförmige Haftfläche (50, 52) von der Art mit Rille (60) und Bund (62) enthält.

3. Vorrichtung (20) nach Anspruch 1 oder 2, bei der das steife Organ (30) erste (32) und zweite (34) gegenüberliegende Endseiten enthält, wobei die erste Seite (32) die Messfläche (28) und die zweite Seite (34) eine Kontaktseite mit einer verformbaren Fläche (24) bildet, die funktionell mit dem Aufnehmer (22) verbunden ist.

4. Vorrichtung (20) nach Anspruch 3, bei der der Bereich der ersten Endseite (32) des Organs (30) gleich dem Bereich der verformbaren Fläche (24) ist.

5. Vorrichtung (20) nach einem der Ansprüche 1 bis 4, bei der die elastische Masse (40) auf das steife Organ (30) und den Träger (38) aufgeformt ist.

6. Vorrichtung (20) nach einem der Ansprüche 1 bis 5, bei der das steife Organ (30) aus einem unverformbaren Material hergestellt ist, das zum Beispiel hauptsächlich Polyetheretherketon (PEEK) enthält.

7. Vorrichtung (20) nach einem der Ansprüche 1 bis 6, bei der die elastische Masse (40) aus einem Material hergestellt ist, das hauptsächlich Silikon oder einen Gummi auf der Basis von Butyl enthält.

8. Vorrichtung (20) nach einem der Ansprüche 1 bis 7, bei der der Aufnehmer (22) von der Art mit Piezoelektrikum oder mit Dehnungsmessgerät ist.

9. Vorrichtung (20) nach einem der Ansprüche 1 bis 8, bei der der Träger (38) eine Außenfläche aufweist, die dazu bestimmt ist, in ein Loch (18) eines Formwerkzeugs (10) eingesteckt zu werden, das in ein Aufnahmevolumen (14) eines Stoffs mündet, dessen Druck gemessen werden soll.

10. Einheit aus einer Druckmessvorrichtung und einem Formwerkzeug zur Vulkanisierung eines Gummis für einen Luftreifen, die enthält:
- eine Innenwand, die ein Aufnahmevolumen des Gummis begrenzt, und
- ein Loch, das dazu bestimmt ist, die Druckmessvorrichtung aufzunehmen, wobei das Loch in das Volumen mündet,
**dadurch gekennzeichnet, dass** die Vorrichtung gemäß einem der Ansprüche 1 bis 9 ist.
